Europäisches Patentamt

European Patent Office

Office européen des brevets

(19)

(11) Veröffentlichungsnummer : **0 175 111
B1**

(12) **EUROPÄISCHE PATENTSCHRIFT**

(45) Veröffentlichungstag der Patentschrift :
19.07.89

(21) Anmeldenummer : 85109765.9

(22) Anmeldetag : 02.08.85

(51) Int. Cl.⁴ : **B 23 D 35/00**// B26D7/26

(54) **Vorrichtung zum Stanzen von Stapeln aus flachen Werkstücken.**

(30) Priorität : 03.09.84 DE 3432385

(43) Veröffentlichungstag der Anmeldung :
26.03.86 Patentblatt 86/13

(45) Bekanntmachung des Hinweises auf die Patenterteilung : 19.07.89 Patentblatt 89/29

(84) Benannte Vertragsstaaten :
BE FR GB IT

(56) Entgegenhaltungen :
DE–A– 2 131 397
DE–A– 2 522 654
DE–A– 2 915 689
DE–A– 3 331 069
FR–A– 2 262 568
FR–A– 2 420 426
FR–A– 2 451 265

(73) Patentinhaber : Windmöller & Hölscher
Münsterstrasse 48-52
D-4540 Lengerich i.W. (DE)

(72) Erfinder : Achelpohl, Fritz, Ing.grad.
Banningstrasse 3
D-4540 Lengerich (DE)

(74) Vertreter : Lorenz, Eduard et al
Rechtsanwälte Eduard Lorenz - Bernhard Seidler
Margrit Seidler - Dipl.-Ing. Hans-K. Gossel Dr. Ina
Philipps - Dr. Paul B. Schäuble Dr. Siegfried Jackermeier
Widenmayerstrasse 23 D-8000 München 22 (DE)

EP 0 175 111 B1

**Beschreibung**

Die Erfindung betrifft eine Vorrichtung zum Stanzen von Stapeln aus flachen Werkstücken, vorzugsweise zum Ausstanzen von Hemdchenausschnitten aus gestapelten, mit Seitenfalten und Kopf- und Bodenschweißnähten versehenen Schlauchabschnitten aus thermoplastischem Kunststoff zur Herstellung von Hemdchenbeuteln, mit einem in einem Maschinengestell gelagerten Satz von Stanzwerkzeugen, deren Stempel mit einem diesen aufwärts und abwärts bewegenden Antrieb versehen und deren Schneidplatte gestellfest angeordnet ist, und mit einer die Stapel intermittierend zwischen die Stanzwerkzeuge fördernden und abfördernden Fördereinrichtung.

Bei aus der DE-A 29 15 689 und der nicht vorveröfffentlichten DE-A 33 31 069 bekannten Vorrichtungen dieser Art zur Herstellung von Hemdchenbeuteln werden die Stanzwzekzeuge verhältnismäßig schnell stumpf, was ein häufiges Nachschleifen bzw. Auswechseln der stumpfen Stanzwerkzeugsätze bedingt und damit längere Maschinenstillstände zur Folgt hat.

Aufgabe der Erfindung ist es daher, eine Vorrichtung nach dem Oberbegriff des Patentanspruchs derart zu verbessern, daß durch die stumpfgewordenen Stanzwerkzeugsätze keine nennenswerten die Produktion unterbrechenden Maschinenstillstände mehr entstehen.

Erfindungsgemäß wird diese Aufgabe dadurch gelöst, daß mindestens zwei Satze von Stanzwerkzeugen mit ihren zugehörigen Antrieben in einer Reihe in einem im Maschinengestell quer zur Förderrichtung hin-und herverschieblich geführten Schlitten angeordnet sind, der in zwei Betriebsstellungen im Maschinengestell arretierbar ist, in denen jeweils mindestens ein Satz der Stanzwerkzeuge seitlich aus dem Maschinengestell herausgefahren ist. Bei der erfindungsgemäßen Vorrichtung ist die Anzahl der die Stapel bearbeitenden Stanzwerkzeugsätze verdoppelt, so daß sich jeweils die Hälfte der Stanzwerkzeugsätze in ihrer Betriebsstellung befindet, während die andere Hälfte der Stanzwerkzeugsätze in ihre Ruhestellung, vorzugsweise außerhalb des Maschinengestells, verschoben ist, so daß die Stempel und Schneidplatten dieser Stanzwerkzeugsätze nachgeschliffen oder ausgetauscht werden können. Um einen geschärften oder ausgetauschten Werkzeugsatz in die Betriebsstellung zu bringen, ist es lediglich erforderlich, den Schlitten um die entsprechende Strecke quer zu verschieben. Diese Verschiebung erfolgt in der Zeit, in der ein neues Paket gebildet wird, so daß keine Betriebsunterbrechung erforderlich ist. Der erhöhte Aufwand, der durch die Verdoppelung der Stanzwerkzeugsätze entsteht, ist im Verhältnis zum Gesamtwert der Maschine nur gering, so daß sich die entsprechenden zusätzlichen Kosten durch den Wegfall der sonst notwendigen Betriebsunterbrechungen schnell amortisieren.

Zweckmäßigerweise besteht der Schlitten aus einer rahmenartigen Konstruktion mit Querträgern für die oberen und unteren Stanzwerkzeuge, der auf im Maschinengestell gelagerten Rollen abgestützt ist, wobei die Seitenwände des Maschinengestells mit Fenstern versehen sind, aus denen der Schlitten herausfahrbar ist.

Weitere vorteilhafte Ausgestaltungen der Erfindung sind Gegenstand der Unteransprüche.

Ein Ausführungsbeispiel der Erfindung wird nachstehend anhand der Zeichnung näher erläutert. In dieser zeigt

Fig. 1 eine Seitenansicht der Vorrichtung zum Bilden von Stapeln aus mit Kopf- und Bodenschweißnähten versehenen Schlauchabschnitten und zum Stanzen und Fördern dieser Stapel in schematischer Seitenansicht,

Fig. 2 eine Vorderansicht der Stanzeinrichtung nach Fig. 1 in vergrößerter Darstellung und

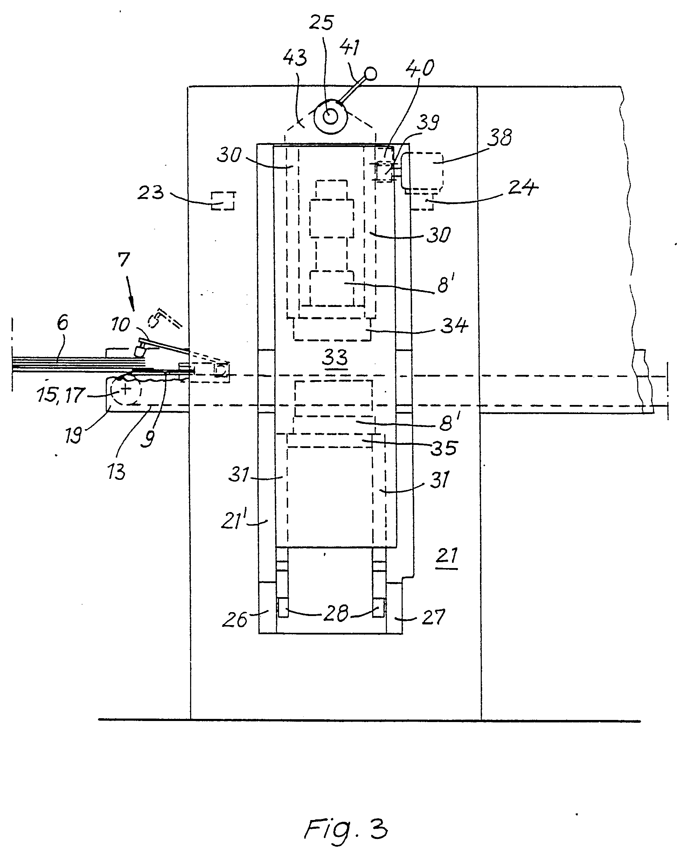

Fig. 3 eine Seitenansicht der Stanzeinrichtung nach Fig. 2.

Eine im sogenannten Dreifachnutzen arbeitende Schweiß- und Trenneinrichtung 1 schweißt jeweils von drei parallel zueinander geförderten flachliegenden und mit Seitenfalten versehenen Schlauchbahnen in jedem Takt drei Schlauchabschnitte ab, die mit Kopf- und Bodenschweißnähten versehen sind.

Im folgenden wird die Vorrichtung hauptsächlich nur anhand eines sogenannten Nutzens beschrieben, da die entsprechenden Einrichtungen der anderen Nutzen identisch sind.

Die mit Kopf- und Bodenschweißnähten versehenen Schlauchabschnitte gelangen zunächst auf ein unteres Saugförderband 3 und werden von diesem an ein oberes Saugförderband 4 übergeben. Unterhalb des abgabeseitigen Endes dieses oberen Saugbandförderers 4 befindet sich ein Stapeltisch 5, auf den die einzelnen Beutel 2 abgeworfen und dort gestapelt werden. Sobald ein Stapel 6 mit der gewünschten Beutelzahl gebildet ist, wird dieser an seinem in Förderrichtung gesehen vorderen Ende von Greiferzangen 7 festgeklemmt und unter eine Stanze 8' gezogen, die die Ausschnitte zur Herstellung von Hemdchenbeuteln ausstanzt. Die Greiferzangen 7 bestehen aus unteren mit einem Querträger 8 fest verbundenen Schenkeln 9 und aus oberen Schenkeln 10, die an einer verdrehbaren Welle 11 befestigt sind. Die Welle 11 ist in Haltern 12 gelagert, wobei letztere mit dem Querträger 8 verschraubt sind.

An beide Enden des Querträgers 8 greift jeweils ein Endloszahnriemen 13 bzw. 14 an, die je zwei Umlenkrollen 15, 16 bzw. 17, 18 umschlingen, von denen zumindest eine reversierend antreibbar ist. Die Umlenkrollen 15-18 sind in zwei Seitenholmen 19 und 20 gelagert. Je ein Seitenholm ist fest mit je einer Rahmenseitenwand 21 bzw. 22 verschweißt, wobei letztere miteinander durch Quertraversen 23 und 24 sowie durch eine Welle 25 verbunden ist.

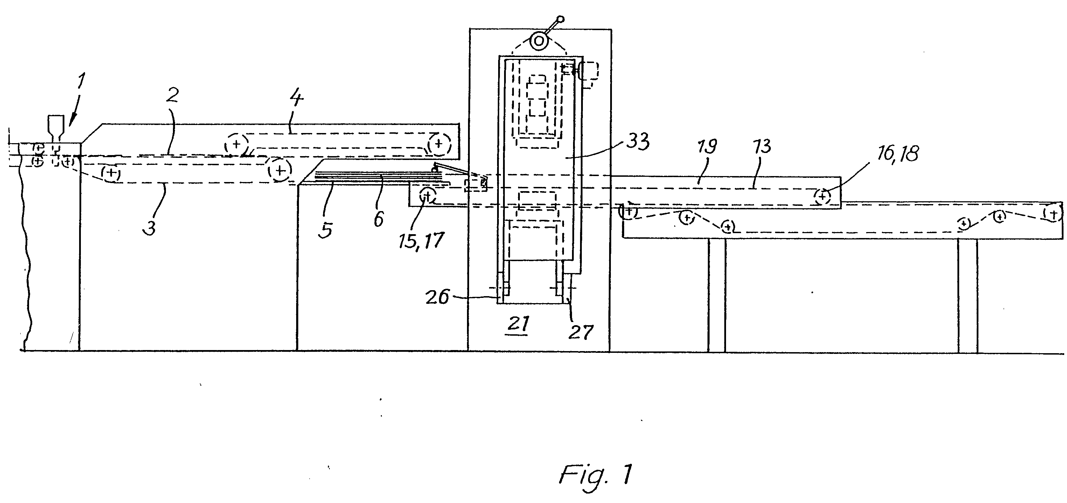

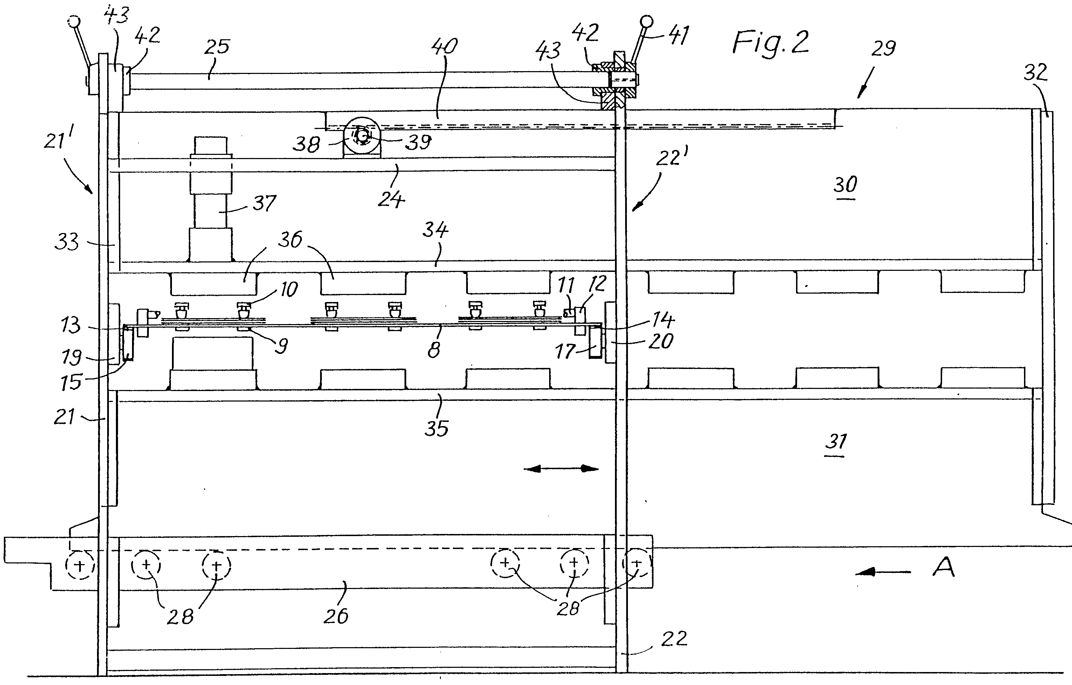

Aus den Fig. 1 und 2 ist zu erkennen, daß die Rahmenseitenwände 21 und 22 fensterartige Ausschnitte 21' und 22' aufweisen. Auf die unteren Begrenzungen der Ausschnitte 21' und 22' sind seitliche Träger 26 und 27 aufgelegt und befestigt, die die beiden Rahmenseitenwände 21 und 22 miteinander verbinden und die auf den Rahmenseitenwänden nach außen um ein geringes Maß vorstehen. An den Trägern 26 und 27 sind mehrere Tragrollen 28 drehbar gelagert, auf denen eine Kassette 29 verschiebbar aufruht. Die Kassette 29 besteht aus oberen und unteren Seitenwänden 30 und 31 sowie aus diese miteinander verbindenden Stirnplatten 32 und 33. Sowohl mit den Stirnplatten als auch mit den Seitenwänden sind zwei parallel und mit Abstand zueinander verlaufende Stützplatten 34 und 35 verschweißt, wobei die obere 34 insgesamt sechs Stanzwerkzeuge 36 und die untere 35 die entsprechenden Gegenwerkzeuge trägt. Der Einfachheit halber ist nur eine einem Stanzwerkzeug 36 zugeordnete Kolbenzylindereinheit 37 dargestellt.

Die die oberen Schneidwerkzeuge bildenden Stempel sind in nicht dargestellter Weise jeweils an den Kolbenstangen der Druckmittelkolbenzylindereinheiten befestigt. Im Betrieb werden nur die drei Druckmittelkolbenzylindereinheiten mit Druckmittel beaufschlagt, die sich jeweils in der Betriebsstellung befinden, so daß die Schneidwerkzeuge der anderen drei Stanzwerkzeugsätze geschärft oder ausgetauscht werden können.

Aus der Fig. 2 ist zu erkennen, daß nur drei Stanzwerkzeuge und die zugehörigen drei Gegenwerkzeuge in Betriebsstellung sind und aus den drei zugeführten Stapeln 6 Hemdchenbeutelausschnitte ausstanzen können. Sind die im Eingriff befindlichen Werkzeugsätze stumpf, wird der auf der Traverse 24 befestigte Motor 38 eingeschaltet, dessen Ritzel 39 mit der an der Seitenwand 30 befestigten Zahnstange 40 kämmt. Hierdurch wird die gesamte Kassette 29 in Pfeilrichtung A so weit verschoben, bis die drei in Fig. 2 linken Stanzwerkzeugsätze durch den Ausschnitt 21' heraus und die drei in Fig. 2 rechten Stanzwerkzeugsätze in Betriebsstellung gefahren sind. Die stumpfen Werkzeugsätze können dann geschärft bzw. ausgetauscht werden, ohne die Hemdchenbeutelmaschine stillsetzen zu müssen.

Damit nun die Kassette 29 in der gewünschten Stellung arretiert ist, sind auf die Enden der Welle 25 Handhebel 41 aufgesetzt, so daß die Welle 25 verdreht werden kann. Damit werden gleichzeitig auch die auf der Welle befestigten Exzenterbüchsen 42 verdreht, so daß die Druckstücke 43, in denen die Exzenterbüchsen 42 gelagert sind, von oben auf die Kassette 29 gepreßt werden, so daß diese zwischen den Druckstükken und den Tragrollen 28 verklemmt wird.

## Patentansprüche

1. Vorrichtung zum Stanzen von Stapeln (6) aus flachen Werkstücken, vorzugsweise zum Ausstanzen von Hemdchenausschnitten aus gestapelten, mit Seitenfalten und Kopf- und Bodenschweißnähten versehenen Schlauchabschnitten aus thermoplastischem Kunststoff zur Herstellung von Hemdchenbeuteln, mit einem in einem Maschinengestell gelagerten Satz von Stanzwerkzeugen (36), deren Stempel mit einem diesen aufwärts und abwärts bewegenden Antrieb versehen und deren Schneidplatte gestellfest angeordnet ist, und mit einer die Stapel intermittierend zwischen die Stanzwerkzeuge fördernden und abfördernden Fördereinrichtung (3, 4), dadurch gekennzeichnet, daß mindestens zwei Sätze von Stanzwerkzeugen (36) mit ihren zugehörigen Antrieben (37) in einer Reihe gemeinsam in einer im Maschinengestell quer zur Förderrichtung hin- und herverschieblich geführten Kassette (29) angeordnet sind, die in ihren zwei Betriebsstellungen im Maschinengestell arretierbar ist, in denen jeweils mindestens ein Satz der Stanzwerkzeuge seitlich aus dem Maschinengestell herausgefahren ist.

2. Vorrichtung nach Anspruch 1, dadurch gekennzeichnet, daß die Kassette (29) aus einer rahmenartigen Konstruktion mit Querträgern (34, 35) für die oberen und unteren Stanzwerkzeuge besteht, die auf im Maschinengestell gelagerten Rollen (28) abgestützt ist, und daß die Seitenwände (21, 22) des Maschinengestells mit Fenstern (21', 22') versehen sind, aus denen die Kassette (29) herausfahrbar ist.

3. Vorrichtung nach Anspruch 1 oder 2, dadurch gekennzeichnet, daß die Kassette (29) zu ihrem Querverschieben mit einer Zahnstange (40) versehen ist, mit der ein Ritzel (39) eines gestellfest angeordneten Getriebemotors (38) kämmt.

4. Vorrichtung nach einem der Ansprüche 1 bis 3, dadurch gekennzeichnet, daß zum Blockieren der Kassette (29) im Maschinengestell auf diese wirkende Spannexzenter (43) gelagert sind.

5. Vorrichtung nach einem der Ansprüche 1 bis 4, dadurch gekennzeichnet, daß in der Kassette (29) sechs Sätze von Stanzwerkzeugen zum Arbeiten im Dreifachnutzen angeordnet sind.

## Claims

1. Apparatus for stamping stacks (6) of flat workpieces, preferably for stamping shirt cut-out portions out of stacked tube portions of thermoplastic material which are provided with side folds and top and bottom welded seams, for the production of shirt bags, comprising a set of stamping tools (36) which is mounted in a machine frame, the punch of the stamping tools being provided with a drive for moving same upwardly and downwardly and the cutting plate of the stamping tools being arranged in stationary relationship with the frame, and a conveyor means (3, 4) for intermittently conveying the stacks between the stamping tools and conveying them away, characterised in that at least two sets of stamping tools (36) with their associated drives (37) are arranged in a row jointly in a cassette (29) which is guided in the machine frame for reciprocating sliding movement transversely with respect to the direction of conveying movement and which can be arrested in its two operative positions in the machine frame, in each of which at least one set of stamping tools is extended laterally out of the machine frame.

2. Apparatus according to claim 1 characterised in that the cassette (29) comprises a frame-like construction with transverse bearers (34, 35) for the upper and lower stamping tools, which is supported on rollers (28) mounted in the machine frame, and that the side walls (21, 22) of the machine frame are provided with windows (21', 22') out of which the cassette (29) can be extended.

3. Apparatus according to claim 1 or claim 2 characterised in that the cassette (29) is provided with a rack (40) for the transverse movement thereof, a pinion (39) of a gear motor (35) which is arranged in fixed relationship with the frame meshing with the rack (40).

4. Apparatus according to one of claims 1 to 3 characterised in that clamping eccentrics (43) which act on the cassette (29) are mounted in the machine frame for locking the cassette (29).

5. Apparatus according to one of claims 1 to 4 characterised in that six sets of stamping tools are arranged in the cassette (29) for operating in a three-line mode.

## Revendications

1. Appareil pour couper des piles (6) de feuilles, de préférence pour découper des coupes rondes dans des sections de film en plastique thermoplastique ayant des plis latéraux et des soudures en tête et au fond pour la fabrication de sachets à anses en « bretelles de chemise », comportant un jeu d'outils de découpage (36) logé dans un bâti de machine, dont les poinçons sont pourvus d'un entraînement les déplaçant vers le haut et vers le bas et dont la plaque de découpage est disposée de manière solidaire avec le bâti, comportant par ailleurs un dispositif de transport (3, 4) transportant et évacuant les piles par intermittence entre les outils de découpage, caractérisé en ce qu'au moins deux jeux d'outils de découpage (36) avec leurs entraînements (37) correspondants sont disposés ensemble en une rangée dans une cassette (29) guidée dans le bâti de machine dans un mouvement de va-et-vient transversal par rapport au dispositif de transport, ladite cassette pouvant être arrêtée dans deux positions de travail dans le bâti de machine, dans lesquelles chaque fois un jeu d'outils de découpage est latéralement sorti du bâti de machine.

2. Dispositif selon la revendication 1, caractérisé en ce que la cassette (29) consiste en une construction en forme de cadre avec des traverses (34, 35) pour les outils de découpage supérieurs et inférieurs, ladite construction reposant sur des rouleaux (28) logés dans le bâti de machine, et que les parois latérales (21, 22) du bâti de machine sont pourvues de fenêtres (21', 22') à travers lesquelles la cassette (29) sort.

3. Dispositif selon les revendications 1 ou 2, caractérisé en ce que la cassette (29) est pourvue d'une crémaillère (40) pour le mouvement transversal qui s'engrène dans un pignon (39) d'un moteur d'entraînement (38) disposé de manière solidaire au bâti.

4. Dispositif selon l'une quelconque des revendications 1 à 3, caractérisé en ce que pour le blocage de la cassette (29) dans le bâti de machine des excentriques de serrage (43) agissant sur la cassette sont prévus.

5. Dispositif selon l'une des revendications 1 à 4, caractérisé en ce que six jeux d'outils de découpage pour travailler à un rythme triple sont disposés dans la cassette (29).

Fig. 1

EP0 175 111B1

Fig.2

EP0 175 111B1

Fig. 3